# EUROPEAN PATENT SPECIFICATION

(11) **EP 0 870 569 B1**
(45) Date of publication and mention of the grant of the patent: **18.06.2003**
(21) Application number: 98106703.6
(22) Date of filing: 14.04.1998
(51) Int. Cl.: B23K 23/00

(54) **Welding apparatus and method**
Schweisseinrichtung und -Verfahren
Méthode et appareil de soudage

(30) Priority: 11.04.1997 US 43282 P
(43) Date of publication of application: 14.10.1998
(73) Proprietor: ERICO INTERNATIONAL CORPORATION, Solon Ohio 44139 (US)
(72) Inventor: Fuchs, Jean Claude, L'Etrat 42580 (FR)
(74) Representative: Gille Hrabal Struck Neidlein Prop Roos

(56) References cited:
- US-A- 3 161 928
- US-A- 4 879 452

## Description

This invention relates generally as indicated to welding apparatus and method and more particularly to an exothermic welding apparatus for welding objects such as electrical conductors, and a process for economically forming good high ampacity low resistance electrical connections.

Exothermic welding has become recognized as a preferred way to form top quality high ampacity low resistance electrical connections. Reusable refractory molds usually made of graphite or the like are widely used with exothermic welding materials to make a wide variety of such high ampacity low resistance electrical connections. Typical of such molds are those sold under the well-known trademark CADWELD® by ERICO International of Solon, Ohio USA.

The reusable molds are two or more part molds usually opened and closed and held together by toggle clamps. The mold parts have faces which abut at a parting plane In which are formed recesses forming the various cavities and passages when the parts are clamped together. Typically the mold parts form a weld chamber, which usually Includes a riser which may be the enlarged lower end of a tap hole passage which extends from the top of the'mold to the weld chamber.

The parts to be welded enter the weld chamber through sleeving passages which extend from outside the mold to the weld chamber. Such passages usually extend horizontally or from the bottom. Horizontal passages are typically employed when welding cable-to-cable. They may be used in combination with a vertical passage when welding cable to an earthing rod, for example.

A crucible normally sits on top of the assembled mold parts. The crucible includes a chamber holding the exothermic material on top of a fusible disc. A sprue or tap hole below the disc communicates with the top of the tap hole of the mold. When a measured and controlled quantity of exothermic material is ignited, it forms molten metal which fuses the disc permitting the molten metal to run downwardly into the weld chamber to weld any parts exposed to the chamber. Any slag forms on top of the weld metal and normally accumulates in the riser. After the weld cools, the mold is disassembled and any slag removed. The mold and crucible are cleaned for reuse.

Such molds can be rather intricate and are not insignificant in cost. More importantly, for each type of connection a different mold assembly Is normally required. This creates an extremely large number or inventory of molds, and makes the storage, transportation, and selective use of such molds both costly and burdensome. While some mold sets may accommodate different size conductors, usually with shims, sleeving or packing around smaller conductors In larger passages, such shims or sleeving contribute to the wear of the molds shortening their useful lives. All of the above contributes to the cost of making such high quality connections. Because of such costs, users and owners may select less expensive but less efficient connections, and connections of lower quality.

US-A-3,161,928 discloses a welding apparatus comprising. a first mold for exothermic welding including a face having a tap hole, a second mold having a plurality of faces, and means to clamp said first mold to a selected face of said second mold to weld parts together, whereby said recesses are formed externally of said second mold In only one face. The parts to be welded together are clamped between the faces of the molds.

Accordingly, it is desirable to maintain the cost of the apparatus and methods for making such exothermic connections as low as possible. This may be accomplished by reducing the number of molds parts required to make a variety of types and sizes of connections. This may also be accomplished by reducing the wear on the fewer molds parts and simplifying fixtures for holding, opening and closing the molds parts.

This object can be solved by a welding-apparatus according to the Introductory portion of claim 1 with the features of the characterizing portion of claim 1. Further this object can be solved by a method for welding according to claim 4. Advantageous embodiments of the Invention are subject matter of the dependent claims.

With a single pair of mold parts at least six different connections can be made. The refractory mold parts are in the form of blocks which may quickly be clamped face-to-face. The blocks are cubic, each having six different faces. For round in section conductors, both blocks have a pattern of recesses in each face, matching the pattern on one face of the other cube. The upper block Includes through tap holes extending centrally through each of the three opposite faces. The lower block in each face simply includes a centrally disposed weld cavity. Each face includes diagonal sleeving passages entering the weld cavity which is in communication with the through-hole in the upper block. The blocks or cubes are releasably held in a hinged fixture and may quickly be removed and replaced so that the desired or selected faces of the cubic blocks abut each other when the fixture is closed and toggle-locked shut. With the conductors inserted in the diagonal passages entering the weld chamber, a crucible containing the exothermic material is inserted in the vertical tap or through-hole. When the exothermic material is ignited it runs through the tap hole in the upper block and into the cavity In the lower block welding the conductors together. When the molten metal is cooled, the mold assembly is opened for cleaning and reuse, and cubic face repositioning if desired.

For flat conductors such as strip, bus bar, tape or braids, for example, on the lower cube only may be repositioned to achieve a different type weld. The six faces of the cubic lower block each provide a different pattern having a central weld cavity cooperating with a riser chamber and tap hole In the upper block. Both blocks may be provided with registering indicia to make tto aid the installer properly to orient the block faces. Since each mold block or set of blocks may provide up to six different connections, far fewer molds are required and better utilization is achieved.

The invention also has utility even if the pattern in each block face is the same. This simply means that one face is used until too worn to be used further. The block is then simply repositioned to utilize an unused face. This process can then be repeated achieving a useful life about six times that of a normal mold.

To the accomplishment of the foregoing and related ends, the invention then comprises the features hereinafter fully described and particularly pointed out in the claims, the following description and the annexed drawings setting forth in detail certain illustrative embodiments of the invention, these being indicative, however, of but a few of the various ways in which the principles of the invention may be employed.
Figure 1 is a vertical section of a mold assembly in accordance with the invention using a two-block assembly for making a variety of types and sizes of electrical connections for round conductors;
Figure 2 is a front elevation showing one face of the lower block of Figure 1;
Figure 3 is another face of the lower block as seen from the top of Figure 2;
Figure 4 is the face seen from the bottom of Figure 2;
Figure 6 is the face seen from the left hand side of Figure 2;

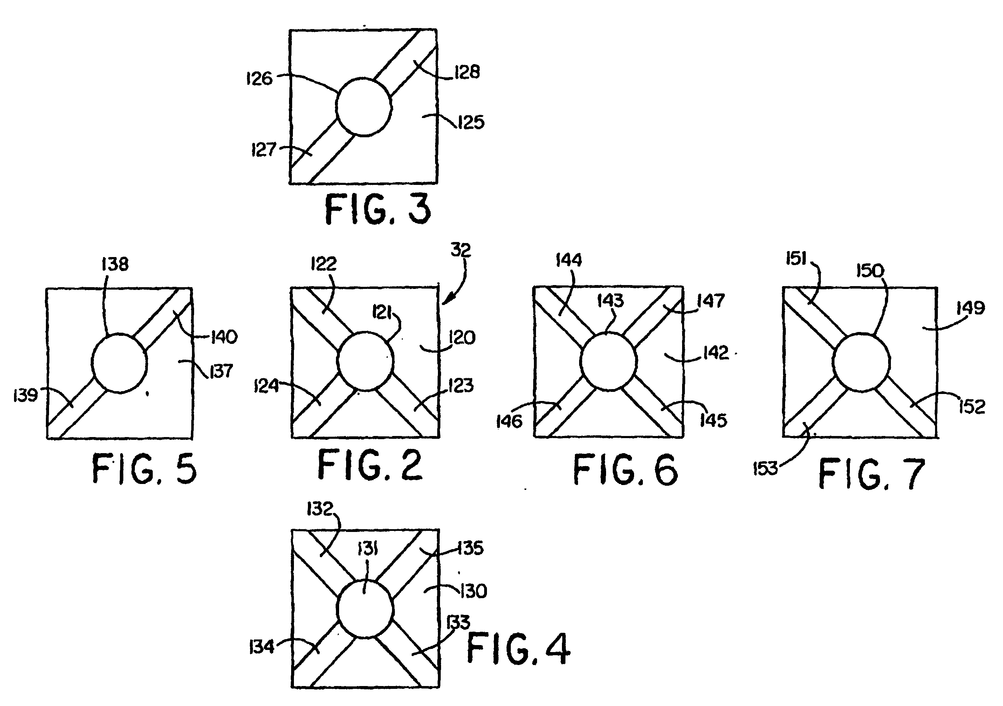

Figure 6 is the face seen from the right hand side of Figure 2;
Figure 7 is the opposite or rear face from that shown in Figure 2;

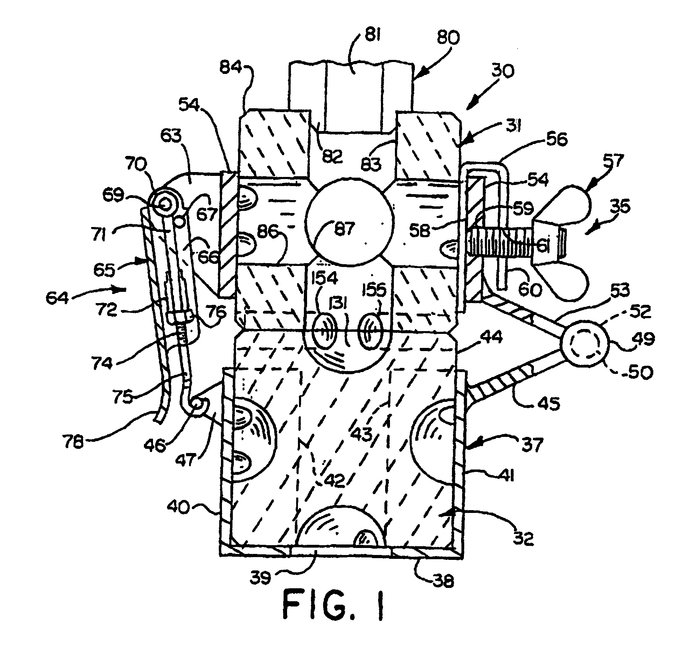

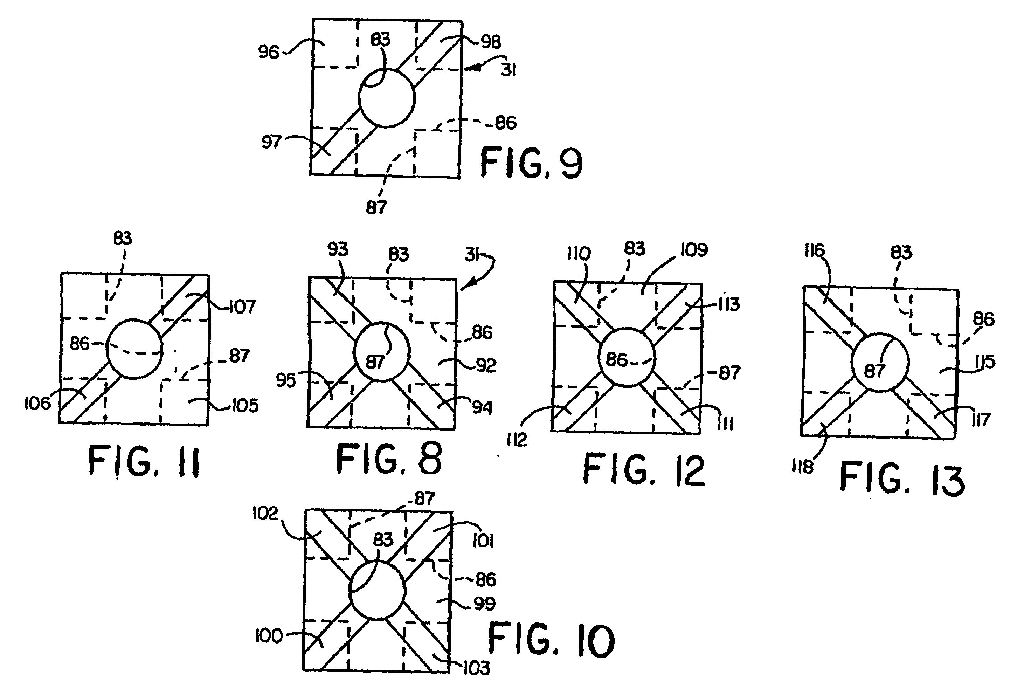

Figure 8 Is a front elevation showing one face of the upper block of Figure 1;
Figure 9 is another face of the upper block as seen from the top of Figure 8;
Figure 10 is the face seen from the bottom of Figure 8;
Figure 11 is the face seen from the left hand side of Figure 8;
Figure 12 is the face seen from the right hand side of Figure 8;
Figure 13 is the opposite or rear face from that shown In Figure 8;

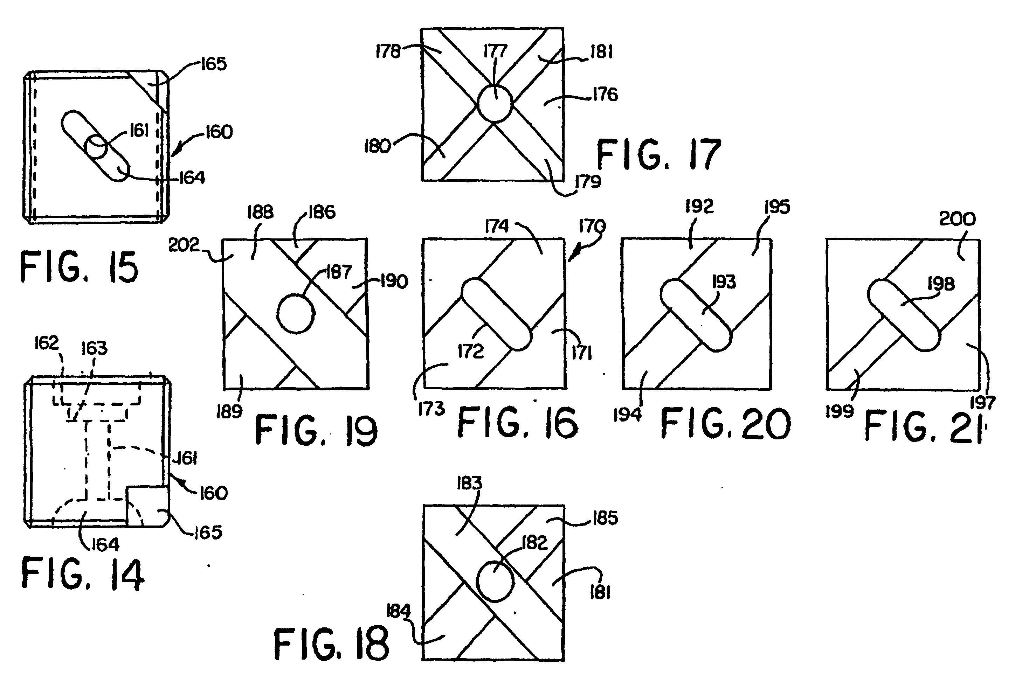

Figure 14 is an elevation of a top block which may be used with a single lower block to make a variety of strap, bar, strip, braid or lug connections;
Figure 15 is a view of the bottom of the block of Figure 14;
Figure 16 is a front elevation of a lower block for use with the top block of Figure 14;
Figure 17 is a top plan view showing the top face of the lower block;
Figure 18 shows the bottom face of the block of Figure 16;
Figure 19 shows the left hand side of the block of Figure 16;
Figure 20 shows the right hand side of the block of Figure 16;

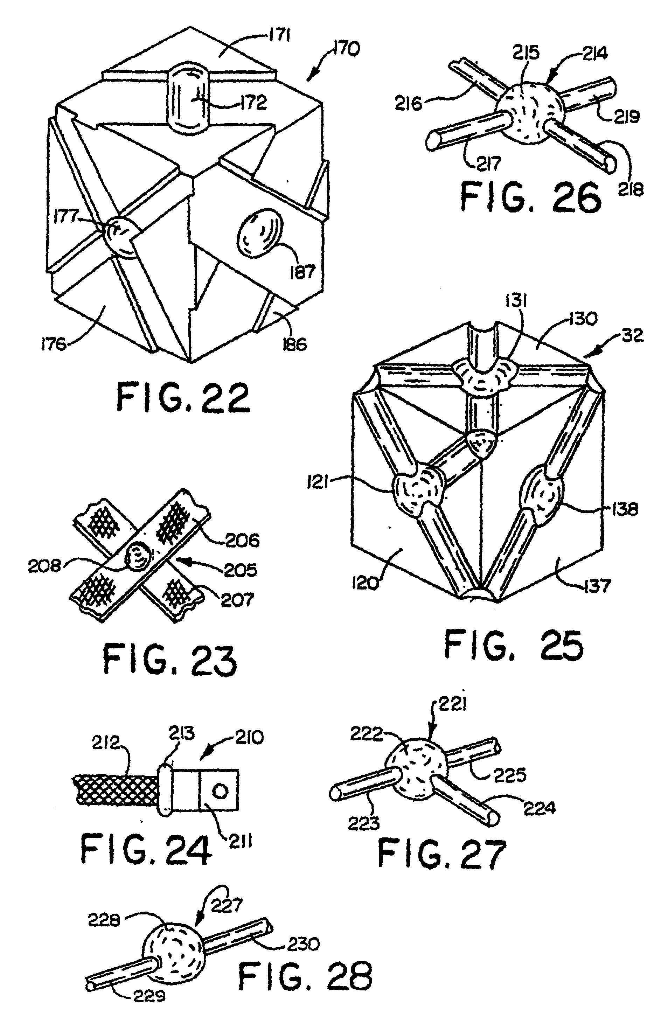

Figure 21 is the opposite or rear face from that shown in Figure 16;
Figure 22 Is a perspective view of the block of Figures 16-21 showing some of the faces with the criss-cross recess patterns;
Figure 23 is a fragmentary illustration of an electrical connection between two strip or braid conductors which may be made with the external mold embodiment of Figures 14-22;
Figure 24 is an illustration of a lug welded to a braid with the embodiments of Figures 14-22;
Figure 25 is a perspective view like Figure 22 of the lower block of the embodiment as seen in Figures 1-7;
Figure 26 is a fragmentary view of an X-connection which may be made with three or four round conductors with the blocks shown in Figures 1-13 and 25;
Figure 27 is a fragmentary view of a T-connection which can be made with the same blocks; and
Figure 28 is a similar view of a straight or in-line connection which may also be made with such blocks.

Referring initially to Figure 1 there is illustrated a mold assembly shown generally at 30 which includes an upper mold block 31 and a lower mold block 32. The two mold blocks are rectangular, and preferably cubic, each having six square faces of substantially equal dimension. The two mold blocks or parts are illustrated mounted in a fixture shown generally at 35 and clamped together with a selected face of the upper block or cube 31 abutting against a selected face of the lower block or cube 32.

The fixture includes a lower frame 37 having a bottom wall 38 with a central hole 39. Projecting from the bottom wall 38 are four right angle corners which confine the four comers of the block 32. Two of the comers are shown at 40 and 41. The confining walls of the comers are substantially spaced as illustrated at 42 and 43 in phantom lines in Figure 1. The block 32 fits within the lower frame with some clearance, and when the fixture is open, the space between the confining corners permits the operator even with a gloved hand readily to remove and replace the lower block 32 in the frame. It Is noted that the top of the block projects substantially above the frame as illustrated at 44. The comers on one side are interconnected by angularly projecting hinge member 45 and on the opposite side by a rod 46 supported spaced from comers by the triangular stanchions 47.

The angularly related hinge arm 45 terminates in hinge knuckles 49 mounted on hinge pin 50. Hinge knuckles 52 are also mounted on the hinge pin 50, and such knuckles are connected to hinge arm 53 extending similarly angularly related and joined to upper frame 54. Upper frame 54 is slightly oversize the block 31 and completely surrounds the block. The upper block Is removably clamped in the upper frame 54 by a U-shape blade 56 and a thumb screw 57. The inner leg 58 of the blade fits inside the frame, and the screw 57 is threaded in tapped hole 59 in the wall of the frame. The outer leg 60 of the blade simply includes a hole 61 through which the stud of the thumb screw loosely fits. The inner leg 58 of the blade extends considerably below the Interior wall of the frame and the tightening of the screw will clamp the upper block 31 in the upper frame 54. The block 31 may quickly be released form the frame simply by loosening the clamp screw.

The opposite side of the upper frame is provided with two spaced projecting ears 63 between which Is pivoted a toggle mechanism shown generally at 64. The toggle mechanism includes a handle 65 which is U-shape in transverse section, one leg of which is shown at 66. Each leg is provided with a stud pivot 67 to the respective ears 63. A transverse pivot pin extends between the legs of the handle at 69, and journaled to such pin is the hub 70 of a link 71 which includes an internally threaded central enlargement 72. The threaded stud 74 of hook 75 is threaded into the enlargement 72 and locked in place by lock-nut 76. The hook extends around transverse rod 46 on the lower frame. The handle extends in curved fashion as seen at 78 to enable the operator to move the handle to and from a toggle-locked position. The handle is shown in the toggle-locking position in Figure 1. The pivot pin 69 is moved over-center the pivots 67, and the link 71 and hook 75 are in tension holding the upper frame closed with the faces of the upper and lower blocks abutting each other. To open the frame, the handle is moved in a clockwise direction as seen in Figure 1 moving the pivot pin 69 back over-center the stud pivots 67 to enable the hook to be released and the two blocks opened by pivoting about the hinge pin 50 on the opposite side.

In any event, the blocks may quickly be inserted in or removed from the frames of the fixture, and when the upper block is clamped in selected position, the fixture can quickly be closed clamping two opposed block faces together.

Figure 1 illustrates the mold blocks closed and locked together and also illustrates a crucible seen generally at 80 mounted on the top block 31. The crucible includes a tap hole 81 extending from the chamber containing the exothermic material and a projecting nozzle 82 which fits within through-hole 83 in the top block 31. The mold blocks including the closed fixture as well as the crucible mounted in the top block may be supported on any substantially level surface.

The two mold blocks are made of a refractory material such as graphite, and both are machined to include certain through holes, recesses, and diagonal sleeving passages, as hereinafter described. As illustrated in Figure 1, the sharp corners of the cubic blocks may be removed as indicated at 84.

Referring now additionally to Figures 8-13, it will be seen that the upper block 31 includes three centrally arranged through-holes interconnecting each opposite face. The through-hole 83 extends from top to bottom. The through-hole 86 extends from side to side, while the through-hole 87 extends from front to rear. It will be seen that the upper cube or block 31 includes six substantially equal square faces which may be termed the front face as seen in Figure 8, the left and right faces seen in Figures 11 and 12, the top and bottom faces seen in Figures 9 and 10, and the rear face seen in Figure 13. Each face includes a diagonally extending sleeving passage pattern which is slightly different. For example, the front face 92 seen in Figure 8 includes aligned half-round or semicircular sleeving passages 93 and 94 which intersect the through-hole 87. Extending at right angles to such sleeving passages is half-round sleeving passage 95 also intersecting the hole 87. The top face 96 seen in Figure 9 simply includes aligned diagonal sleeving passages 97 and 98 each intersecting the central hole 83.

The bottom 99 seen in Figure 10 includes diagonal sleeving passages 100 and 101 which are aligned, and 102 and 103 also aligned but at right angles to the passages 100 and 101, and also intersecting the hole 83.

The left hand face block seen at 105 in Figure 11 includes two aligned half-round sleeving passages 106 and 107 centered with and intersecting the through-hole 86. The sleeving passages 106 and 107 are somewhat smaller than the sleeving passages 97 and 98, for example, and are designed to receive a smaller size conductor.

The right hand face or side of the block seen in Figure 12 at 109 includes half-round diagonal sleeving passages at 110 and 111, which are aligned, and also aligned sleeving passages 112 and 113 at right angles thereto. All of the sleeving passages of the face 109 intersect hole 86 and are of the smaller size.

Finally, the rear face seen at 115 in Figure 13 includes aligned half-round sleeving passages 116 and 117 extending diagonally and sleeving passage 118 intersecting the through-hole 87 and extending at right angles to the sleeving passages 116 and 117.

Referring now to the faces of the lower block as seen in Figures 2-7, the front face 120 seen in Figure 2 includes a central hemispherical recess 121 with aligned diagonal half-round recesses 122 and 123 forming sleeving passages intersecting the hemispherical recess 121. A third sleeving passage is formed by half-round recess 124 extending at right angles to the sleeving passage recesses 122 and 123.

The top surface of the bottom block seen at 125 in Figure 3 includes the central hemispherical recess 126 and two aligned half-round sleeving passages 127 and 128 extending diagonally of the face.

The bottom surface 130 seen in Figure 4 includes the central hemispherical recess 131 and two aligned half-round sleeving passage recesses 132 and 133 extending at right angles to the diagonal recesses 134 and 135, all symmetrically intersecting the central hemispherical recess 131.

The left hand face of the cube includes the central hemispherical recess 138 and aligned diagonal half-round sleeving passages 139 and 140 extending from the central recess as seen In Figure 5.

As seen in Figure 6 the right hand face of the cube includes the central hemispherical recess 143 and aligned diagonal half-round sleeving recesses 144 and 145 as well as sleeving recesses 146 and 147 intersecting the center recess 143 and at right angles to the recesses 144 and 145. The rear face 149 includes the central hemispherical recess 150 with diagonal sleeving passages 151 and 152 being aligned and diagonal sleeving passage 153 at right angles thereto.

Again the sleeving passages seen in Figures 5, 6 and 7 are of a somewhat smaller diameter than those of the sleeving passages seen in Figures 2, 3 and 4. The sleeving passage arrangements as seen in Figures 3 and 5 will make a straight or aligned connection between two conductor ends. The sleeving passage arrangement seen in Figures 4 and 6 will make an X-connection between three or four separate conductors extending into or through the sleeving passages while the sleeve arrangement seen in Figures 2 and 7 will form a T-connection between two or three different conductors extending into or through the sleeving passages.

In comparing the faces of the upper block as seen in Figures 8-13 and the lower block as seen in Figures 2-7, It will be seen that there is a face of each block where the sleeving passage pattern matches. When this happens, the half-round sleeving passages mate with the half-round sleeving passage of the opposing matching face forming full-round or circular sleeving passages for closing and sealing against circular-in-section conductors such as bar, wire, studs or even cable. Also, the hemispherical recess in the center of the bottom block forms the welding chamber and the through-hole extending through the upper block forms the tap hole and resin chamber for the weld metal. Exothermic material ignited in the crucible 80 will flow through the tap hole of the crucible 81 and through the through-hole 83 as seen in Figure 1 into the hemispherical chamber 131 which then acts as the weld chamber. The full-round sleeving passages formed are seen at 154 and 155 in Figure 1. The two different size sleeving passages formed in the various faces may accommodate, for example, 6mm and 8mm conductors, respectively. In such two sizes, the apparatus illustrated will form an X-connection, a T-connection or a straight connection in both sizes. In this manner, with but two mold blocks, by selecting and matching the opposing faces, up to six different connections can be made. For example, if 36 different connections are required, what would normally approximately require a tooling set for each connection, can now be formed in a set of six, greatly reducing the cost and inventory required to make the connections. It will also be appreciated that the external mold of the present invention may also be utilized simply to lengthen the life of a given mold set. For example, each face of the cubic block may have an identical pattern of recesses and sleeving passages. When one wears out, an unused face is employed. In this manner, the mold set useful life is lengthened approximately six times. It will also be appreciated that some faces used more often may be the same, while some may be different.

Referring now to Figures 14-22, there is illustrated another cubic block set for making slightly different types of connections. The top block or cube is seen in Figures 14 and 15 at 160. It includes a vertically extending tap hole 161 which extends from circular seats 162 and 163 in the top of the block to a diagonally elongated riser chamber 164 in the bottom of the block. The bottom of the block is seen in Figure 15. A lower corner of the block is cut away as indicated at 165 to provide an alignment reference point.

The lower block is seen at 170 in Figures 16-21 and has six different faces shown in the respective Figures. The front face 171 includes a diagonal central recess 172 and two relatively shallow channels 173 and 174 which are aligned and which extend diagonally normal to the elongation of the recess 172. The two broad channels or passages 173 and 174 may have slightly different depths. For example, the channel 173 may be about 1.7mm deep while the channel 174 is about 2.2mm deep.

The top face 176 seen in Figure 17 includes a central hemispherical recess 177 from which extend shallow flat grooves 178 and 179 which are aligned and diagonal. Also extending normal to such grooves are grooves 180 and 181 also diagonal, and each groove intersects the center recess 177. The channel recesses 178 and 179 may, for example, be about 2.2mm deep while the channel recesses 180 and 181 are about half that or 1.1mm deep.

The bottom face 181 seen in Figure 18 includes a central hemispherical recess 182. A diagonal channel 183 slightly wider than the recess extends corner-to-corner of the face. Two intersecting channels 184 and 184 extend in the opposite diagonal direction aligned with the center recess and intersecting the diagonal channel 183 at the center of the block face. The channel 183 may be, for example, approximately 3.2mm deep while the channels 184 and 185 are about 1.7mm deep.

As seen in Figure 19, the face 186 includes a central hemispherical recess 187 and a somewhat wider diagonal channel 188 extending comer-to-corner of the face. Intersecting the wider channel are two aligned diagonal channels 189 and 190. The wide channel 188 may be about 3.2mm deep while the channels 189 and 190 are about 1.7mm deep.

In the face 192 seen in Figure 20 there is a central elongated recess 193. Extending laterally of such recess diagonally is a relatively narrow channel 194. Extending oppositely diagonally is a somewhat wider channel 195. The channel 194 may be approximately 1.7mm deep while the wider channel may be approximately 2.2mm deep.

The face 197 seen in Figure 21 also includes a diagonal central recess 198, a yet narrower diagonal channel 199 extending laterally centrally from the recess, and an opposite wider recess 200 extending diagonally. The narrow recess 199 may be about 1.1 mm deep while the wider recess 200 is about 2.2mm deep.

The particular pattern arrangement in the six faces of the cube or block 170 are all designed to cooperate with the bottom face of the block 160 seen in Figure 15. In order to achieve proper spatial alignment with the face shown in Figure 15, each corner of the faces shown in Figures 16-21 may include an indicia or reference point in one comer such as seen at 202 in Figure 20. The reference point can than readily be matched to the cut-away corner 165 of the block 160. The particular patterns illustrated and the depths selected may be utilized to form overlapping weld connections between braid, for example, using the patterns shown in Figures 17, 18 and 19. The channels will accommodate different size braids. The patterns seen in Figures 16, 20 and 21 may be used to form welded connections between braid and lugs, for example.

Referring to Figure 23, there is illustrated a connection shown generally at 205 made between overlapping braided conductors 206 and 207. The connection 205 seen in Figure 23 may be made, for example, by the face 181 seen in Figure 18. The recess 182 forms a spherical weld metal projection 208. The braid 207 fits in the deeper channel while the braid 206 fits in the more shallow channel and the recess 164 will form an elongated weld metal bead along the side of the braid 207, not shown, but extending centrally and parallel to the elongation of the braid.

Figure 24 illustrates a lug connection shown generally at 210 which may be formed by the face 192 seen in Figure 20. The lug 211 is positioned in the wider deeper channel 195 while the braid 212 is positioned in the narrower shallower channel 194. The recess 193 of the block face 192 cooperates with the recess 164 of the top block 160 to form the weld metal bead 213 firmly securing the end of the braid 212 to the lug 211 and forming a high ampacity low resistance electrical connection.

As seen in Figure 25, the perspective view of the block 32 illustrates three different faces for forming the types of connections seen in Figure 26, 27 and 28. Figure 26 illustrates generally at 214 what is known as an X-connection and includes a generally spherical center weld mass 215 which is formed by the mating hemispherical recesses in the opposed block faces. The weld connection may be formed by four conductors 216, 217, 218 and 219 which are positioned in the diagonal sleeving passages. It will be appreciated that of the four conductors illustrated, two aligned conductors may be a continuation of each other so that the connection may be made by either three or four different conductors.

In Figure 27 there is illustrated a T-connection 221 which includes the center spherical weld mass 222 with projecting conductors 223, 224 and 225. It will be appreciated that the conductors 223 and 225 may be in reality a single conductor.

Figure 28 illustrates a single or straight connection 227 which includes the spherical weld mass 228 and conductors 229 and 230 which are aligned with each other. The particular weld type and the particular size of the conductors accommodated, depends upon the selected faces of the two blocks seen in Figures 1-13 and 25.

In the several embodiments of the invention, the sleeving passages or channels extend diagonally. This enables the work being welded readily to clear the hinge on one side of the fixture and the toggle damp on the opposite side.

The present invention greatly reduces the number of different mold parts required to make a variety of connections which would otherwise require separate mold sets. The invention substantially reduces the cost and Inventory of the molds and facilitates the use of fewer molds thus making the high ampacity low resistance connections more economical.

## Claims

1. A welding apparatus comprising,
a first mold (32) for exothermic welding including a face (120;125;130;137;142;149) having a tap hole (131),
a second mold (31) having a plurality of faces (92,99),
and means (35) to damp said first mold (32) to a selected face (92,99) of said second mold (31) to weld parts together,
**characterized in that**
recesses (93,94,95; 100,101,102,103) are formed externally of said second mold (31) in at least two faces (92,99) adapted to receive the parts (216,217,218,219; 223,224,225) to be welded together.

2. Apparatus according to claim 1, wherein said second mold (31) is a block and said faces are identical one to the other to be replaced by the other when said one is worn.

3. Apparatus according to claim 2 wherein said second mold (31) is a block having at least six faces, some of which are identical and some of which are different.

4. Apparatus according to claim 1 wherein said second mold (31) is cubic.

5. Apparatus according to claim 4 wherein each of said faces includes recesses forming diagonal sleeving passages.

6. Apparatus according to claim 1 wherein the recesses in said faces are different and adapted to receive different parts to be welded.

7. Apparatus according to claim 1 wherein said second mold (31) is cubic and at least some of the faces are formed with recesses for receiving different parts.

8. Apparatus according to claim 7 wherein said first mold face is formed with a riser chamber (161) at the tap hole.

9. Apparatus according to claim 8 wherein the first mold face is formed with an orienting comer (165) for orienting the faces of said second mold.

10. Apparatus according to claim 1 said first mold also has recesses in at least two faces adapted to cooperate with said recesses externally of said second mold when a selected face from each mold is clamped together.

11. Apparatus according to claim 10 wherein said first and second molds are cubic and have respective matching recesses in each face.

12. Apparatus according to claim 11 wherein said first mold part has a through-hole interconnecting each opposite face functioning as said tap hole.

13. A method of cast welding comprising
the step of providing a refractory block (31) with at least two faces (92,99),
then clamping a selected face (92,99) against another refractory block (32) to form a selected mold,
and introducing weld metal into selected recesses through said another block (32),
**characterized by**
the step of forming said external recesses (93,94,95; 100,101,102,103) in at least two faces (92,99) of said refractory block (31) before damping said selected face (92,99) against said another refractory block (32).

14. Method according to claim 13 wherein said refractory block is cubic, and forming recesses in each face.

15. Method according to claim 13 wherein said another block has through-holes interconnecting opposite faces for the introduction of the weld metal.

16. Method according to claim 14 wherein said block and another block each include a matching-face so they can be clamped matching-face to matching-face.

17. Method according to claim 16 wherein said matching faces include half-round recesses for forming sleeving passages for round conductors to be welded.

18. Method according to claim 16 including the step of releasably supporting said refractory blocks for such face selection in a hinged fixture, and arranging said sleeving passages to avoid the hinge of the fixture.

19. Method according to claim 18 including the step of arranging the sleeving passages diagonally of the block faces.

## Patentansprüche

1. Schweißeinrichtung, die folgendes enthält:
eine erste Form (32) für das exotherme Schweißen enthaltend eine Fläche (120; 125; 130; 137; 142; 149) mit einer Gewindebohrung (131),
eine zweite Form (31) mit einer Vielzahl von Flächen (92, 99),
und Mittel (35), um die erste Form (32) an einer ausgewählten Fläche (92, 99) der zweiten Form (31) festzuklemmen, um dadurch verschiedene Teile miteinander zu verschweißen,
**dadurch gekennzeichnet, dass**
an der Außenseite der zweiten Form (31) in mindestens zwei der Flächen (92, 99) Einstiche (93, 94, 95; 100, 101, 102, 103) vorgesehen sind, um Teile (216, 217, 218, 219; 223, 224, 225) aufzunehmen, die miteinander verschweißt werden sollen.

2. Schweißeinrichtung nach Anspruch 1,
**dadurch gekennzeichnet, dass**
die zweite Form (31) aus einem Block besteht und die Flächen untereinander identisch sind, um gegeneinander ausgetauscht werden zu können, wenn der erste Block verbraucht ist.

3. Schweißeinrichtung nach Anspruch 2,
**dadurch gekennzeichnet, dass**
die zweite Form aus einem Block mit mindestens sechs Flächen besteht, von denen einige Flächen identisch und andere Flächen unterschiedlich gestaltet sind.

4. Schweißeinrichtung nach Anspruch 1,
**dadurch gekennzeichnet, dass**
die zweite Form (31) kubisch geformt ist.

5. Schweißeinrichtung nach Anspruch 4,
**dadurch gekennzeichnet, dass**
jede der Flächen Einstiche enthält, die diagonale Hohlpassagen bilden.

6. Schweißeinrichtung nach Anspruch 1,
**dadurch gekennzeichnet, dass**
die Einstiche in diesen Flächen unterschiedlich und so ausgelegt sind, dass sie verschiedene Teile aufnehmen können, die miteinander verschweißt werden sollen.

7. Schweißeinrichtung nach Anspruch 1,
**dadurch gekennzeichnet, dass**
die zweite Form (31) eine kubische Form hat, und dass mindestens eine der Flächen mit Einstichen ausgestattet ist, um verschiedene Teile aufzunehmen.

8. Schweißeinrichtung nach Anspruch 7,
**dadurch gekennzeichnet, dass**
die Oberfläche der ersten Form mit einer Durchströmkammer (161) ausgestattet ist, die in der Gewindebohrung angeordnet ist.

9. Schweißeinrichtung nach Anspruch 8,
**dadurch gekennzeichnet, dass**
die Oberfläche der ersten Form mit einer Lagemarke (165) ausgerüstet ist, mit deren Hilfe die Flächen der zweiten Form ausgerichtet werden.

10. Schweißeinrichtung nach Anspruch 1,
**dadurch gekennzeichnet, dass**
die erste Form ebenfalls Einstiche in mindestens zwei Flächen aufweist, die mit den Einstichen an der Außenseite der zweiten Form zusammenwirken können, wenn eine ausgewählte Fläche der jeweiligen Formen miteinander verklemmt werden sollen.

11. Schweißeinrichtung nach Anspruch 10,
**dadurch gekennzeichnet, dass**
die erste und die zweite Form eine kubische Form haben und in jeder ihrer Flächen übereinstimmende Einstiche aufweisen.

12. Schweißeinrichtung nach Anspruch 11,
**dadurch gekennzeichnet, dass**
die erste Form eine durchgehende Bohrung aufweist, mit deren Hilfe die gegenüberliegenden Seiten miteinander verbinden werden können und die als Gewindebohrung dient.

13. Verfahren für das Gießformen, das folgende Schritte umfasst:
Bereitstellen eines feuerfesten Blockes (31), der mindestens zwei Flächen (92, 99) enthält,
anschließendes Verklemmen einer ausgewählten Fläche (92, 99) an einem anderen feuerfesten Block (32), um eine ausgewählte Form zu bilden,
und Einführen von Schweißmaterial durch ausgewählte Einstiche in dem anderen Block (32),
**dadurch gekennzeichnet, dass**
die Herstellung der äußeren Einstiche (93, 94, 95; 100, 102, 102, 103) in mindestens zwei Flächen (92, 99) des feuerfesten Blockes (31) durchgeführt wird, bevor die ausgewählte Fläche (92, 99) an dem anderen feuerfesten Block (32) verklemmt wird.

14. Verfahren nach Anspruch 13,
**dadurch gekennzeichnet, dass**
der feuerfeste Block eine kubische Form hat und in jeder seiner Flächen Einstiche aufweist.

15. Verfahren nach Anspruch 13,
**dadurch gekennzeichnet, dass**
der andere Block Durchgangsbohrungen aufweist, mit deren Hilfe die gegenüberliegenden Flächen miteinander verbunden werden können, um das Schweißmaterial einzufüllen.

16. Verfahren nach Anspruch 14,
**dadurch gekennzeichnet, dass**
die beiden Blöcke jeweils ein Passfläche aufweisen, die es erlaubt, sie mit den anderen Passflächen zu verklemmen.

17. Verfahren nach Anspruch 16,
**dadurch gekennzeichnet, dass**
die Passflächen halbrunde Einstiche enthalten, um Durchgangsbohrungen für runde Leiter zu bilden, die miteinander verschweißt werden sollen.

18. Verfahren nach Anspruch 16,
**dadurch gekennzeichnet, dass**
die feuerfesten Blöcke für die Auswahl der entsprechenden Fläche in einer angelenkten Befestigung angeordnet sind, und die Durchgangsbohrungen so angeordnet sind, dass sie nicht mit dem Gelenk der Befestigung in Berührung kommen können.

19. Verfahren nach Anspruch 18,
**dadurch gekennzeichnet, dass**
die Durchgangsbohrungen diagonal zu den Flächen der Blöcke angeordnet werden.

## Revendications

1. Appareil de soudage comprenant:
un premier moule (32) pour le soudage exothermique incluant une face (120; 125; 130;137; 142; 149) et comprenant un taraudage (131),
un deuxième moule (31) comprenant une multitude de faces (92, 99),
ainsi que des moyens (35) pour serrer le premier moule (32) sur une face selectionnée (92, 99) du deuxième moule (31) pour souder différentes pièces,
**caractérisé en ce que**
des encoches (93, 94, 95; 100, 101, 102, 103) sont formées dans la face extérieure du deuxième moule (31) dans au moins deux de ces faces (92, 99) conçues pour recevoir des pièces (216, 217, 218, 219; 223, 224, 225) à être soudées.

2. Appareil de soudage suivant la revendication 1,
**caractérisé en ce que**
le deuxième moule (31) consiste d'un bloc et **en ce que** ledites faces sont identiques entre elles permettant ainsi de remplacer ce bloc par l'autre bloc lorsque le premier bloc est usé.

3. Appareil de soudage suivant la revendication 2,
**caractérisé en ce que**
le deuxième moule (31) consiste d'un bloc comprenant au moins six faces, dont quelques unes sont identiques, tandisque les autres faces de ce bloc sont différentes.

4. Appareil de soudage suivant la revendication 1,
**caractérisé en ce que**
le deuxième moule (31) a une forme cubique.

5. Appareil de soudage suivant la revendication 4,
**caractérisé en ce que**
les différentes faces comprennent des encoches formant des passages creux diagonaux.

6. Appareil de soudage suivant la revendication 1,
**caractérisé en ce que**
les encoches prévues dans ces faces sont différentes et conçues de sorte à recevoir différentes pièces à être soudées.

7. Appareil de soudage suivant la revendication 1,
**caractérisé en ce que**
le deuxième moule (31) a une forme cubique et **en ce que** au moins quelques unes de ses faces sont pourvues d'encoches permettant de recevoir différentes pièces.

8. Appareil de soudage suivant la revendication 7,
**caractérisé en ce que**
la face du premier moule est équipée d'une chambre de passage (161) disposée dans ledit taraudage.

9. Appareil de soudage suivant la revendication 8,
**caractérisé en ce que**
la face du premier moule est équipée d'un nez d'orientation (165) permettant l'orientation des faces du deuxième moule.

10. Appareil de soudage suivant la revendication 1,
**caractérisé en ce que**
le premier moule comprend également des encoches prévues dans au moins deux de ses faces et conçues de sorte à coopérer avec les encoches externes du deuxième moule lorsqu'une face sélectionnée des différentes moules est jointe par serrage.

11. Appareil de soudage suivant la revendication 10,
**caractérisé en ce que**
le premier et le deuxième moules ont une forme cubique et comprennent dans chacune de leurs faces des encoches correspondantes.

12. Appareil de soudage suivant la revendication 11,
**caractérisé en ce que**
le premier moule est équipé d'un passage traversant creux permettant de connecter les différentes faces opposées et fonctionnant de taraudage.

13. Méthode de soudage, comprenant les étapes suivantes:
l'arrangement d'un bloc réfractaire (31) comprenant au moins deux faces (92, 99),
et serrant ensuite une face (92,99) selectionnée sur un autre bloc réfractaire (32) pour former un moule sélectionné,
et l'introduction d'un métal de soudage à travers les passages creux d'un autre bloc (32),
**caractérisé en ce que**
l'étape de formage des encoches extérieures (93, 94, 95; 100, 101, 102, 103) dans au moins l'une des deux faces (92, 99) du bloc réfractaire est exécutée avant le serrage de la face sélectionnée (92, 99) sur l'autre bloc réfractaire (32).

14. Méthode de soudage suivant la revendication 13,
**caractérisée en ce que**
le bloc réfractaire a une forme cubique et comprend des encoches dans chacune de ses faces.

15. Méthode de soudage suivant la revendication 13,
**caractérisée en ce que**
l'autre bloc est pourvu de passages creux liant les faces opposées et permettant le remplissage du matériau de soudage.

16. Méthode de soudage suivant la revendication 14,
**caractérisée en ce que**
les premier et le deuxième blocs comprennent une face adaptée à les serrer l'un sur l'autre.

17. Méthode de soudage suivant la revendication 16,
**caractérisée en ce que**
les faces d'adaptation comprennent des encoches semi-circulaires formant des passages creux pour des conducteurs circulaires à être soudés.

18. Méthode de soudage suivant la revendication 16,
**caractérisée en ce que**
en vue de la sélection de la face appropriée les blocs réfractaires sont supportés dans une fixation articulée, et **en ce que** les passages creux sont disposés de telle sorte qu'un contact avec l'articulation de la fixation peut être évité.

19. Méthode de soudage suivant la revendication 18,
**caractérisée en ce que**
les passages creux de remplissage sont disposés dans une direction diagonale par rapport aux faces de ces blocs.
